# EUROPEAN PATENT SPECIFICATION

(11) **EP 3 632 986 B1**
(45) Date of publication and mention of the grant of the patent: **08.01.2025**
(21) Application number: 18810747.8
(22) Date of filing: 24.05.2018
(51) Int. Cl.: C08L 77/00, C08L 23/12, C08L 23/26, C08L 91/06, C08L 77/02, C08K 3/16, C08K 3/36, C08L 51/06, C09D 177/02

(54) **POLYAMIDE RESIN COMPOSITION AND RELEASE FILM USING SAME**
POLYAMIDHARZZUSAMMENSETZUNG UND TRENNFOLIE DAMIT
COMPOSITION DE RÉSINE DE POLYAMIDE ET FILM ANTIADHÉSIF UTILISANT LADITE COMPOSITION

(30) Priority: 30.05.2017 JP 2017106694; 30.05.2017 JP 2017106695; 16.06.2017 JP 2017118728
(43) Date of publication of application: 08.04.2020
(73) Proprietor: UBE Corporation, Ube-shi, Yamaguchi 755-8633 (JP)
(72) Inventor: TAKEUCHI, Shunya, Ube-shi Yamaguchi 755-8633 (JP); YABU, Naoyasu, Ube-shi Yamaguchi 755-8633 (JP); SANO, Hideo, Ube-shi Yamaguchi 755-8633 (JP)
(74) Representative: Hoffmann Eitle
(86) International application number: PCT/JP2018/020032
(87) International publication number: WO 2018/221378

(56) References cited:
- EP-A1- 0 372 866
- WO-A1-2017/073559
- WO-A1-2017/073560
- CN-A- 105 017 761
- JP-A- 2001 072 863
- JP-A- 2005 350 536
- JP-A- 2006 525 383
- JP-A- 2013 129 800
- JP-A- 2013 203 949
- JP-A- H 059 379
- JP-A- H02 500 917
- JP-A- H09 506 125
- JP-A- S6 456 750
- JP-A- S62 250 053
- US-A- 5 959 031

## Description

### TECHNICAL FIELD

The present invention relates to a use of a polyamide resin composition for forming a release film, the composition having improved releasability when made into a film, and a release film comprising the polyamide resin composition.

### BACKGROUND ART

Racket frames for tennis or badminton, golf shafts, fishing rods, and the like have hollow inside for weight saving. As a method for producing a tubular structure having hollow inside, an internal pressure molding method is known. In the internal pressure molding method, for example, the tubular structure having hollow inside is obtained by winding a prepreg around a tubular film, by molding the surrounding prepreg while a high pressure is applied inside the tube, and then by removing the tube. As the tubular film, a polyamide film is used.

Patent Document 1 discloses a tubular body produced by a fiber reinforced plastic, in which the tubular body has a thermoplastic film inside the fiber reinforced plastic layer, and in which the thickness of the thermoplastic film is 5 µm or more and 30 µm or less. Further, Patent Document 2 discloses a method for producing a hollow racket frame composed of a fiber reinforced resin by mold molding, in which a release layer composed of a silicone polymer or a fluorine-based polymer is formed on a surface of a flexible tube for internal pressure filling used in a mold during heat molding, and in which the flexible tube is removed from the frame after molding.

Patent Document 3 describes an UV-resistant nylon plastic material , the raw materials of which include 40 parts of PA6, 45 parts of a modified glass fiber, 5 parts of polyethylene, 15 parts of polyethylene grafted maleic anhydride polymer, 10 parts of polypropylene, 30 parts of silicon ash stone, 10 parts of kaolin, 40 parts of glass beads, 3 parts of carbon black, 10 parts of nano titanium dioxide, 1 part of a titanate coupling agent, 3 parts of polyethylene wax, 0.5 parts of zinc stearate, 2 parts of a dispersing agent, 2 parts of a toughening agent, 2 parts of a lubricant, 1 part of an antioxidant, 4 parts of a light stabilizer, 1 part of an ultraviolet absorber, 0.8 parts of a rare earth metal compound, and 1 part of maleic anhydride grafted EPDM.

Patent Document 4 describes a release film made from a composition comprising 85 wt.% of nylon 66, 3 wt.% of maleic anhydride grafted-polyethylene, 9 wt.% of polypropylene, and 3 wt.% of an ethylene/propylene copolymer.

Patent Document 5 describes a composition comprising 100 parts of nylon 6, 25 parts of a maleic acid-modified polyethylene, 2.5 parts of triallyl isocyanurate, and 0.38 parts of Irganox^{®} B1171.

### PRIOR ART DOCUMENTS

### PATENT DOCUMENTS

Patent Document 1: JP 2000-238152A
Patent Document 2: JP 11-244424A
Patent Document 3: CN 105 017 761 A
Patent Document 4: EP 0 372 866 A1
Patent Document 5: JP 2005 350536 A

### SUMMARY OF THE INVENTION

### PROBLEM TO BE SOLVED BY THE INVENTION

However, when trying to remove a tube composed of a polyamide film from the tubular structure after molding, the tube may be teared. Therefore, the improvement of the releasability has been required.

Accordingly, an object of the present invention is to provide a polyamide resin composition having improved releasability when made into a film, and a release film using the same.

### MEANS OF SOLVING THE PROBLEM

The present invention relates to a use of a polyamide resin composition for forming a release film, wherein the polyamide resin composition comprises: a polyamide resin, a non-modified polypropylene resin, and a polyolefin wax and/or a modified polyethylene resin;
wherein the content of the non-modified polypropylene resin is from 0.1 to 10 mass%; and
wherein the content of the polyolefin wax and/or the modified polyethylene resin is from 0.3 to 5 mass%.

Further, the present invention is a release film comprising the polyamide resin composition as described above.

### EFFECT OF THE INVENTION

According to the present invention, a use of a polyamide resin composition for forming a release film, the composition having improved releasability when made into a film, and a release film using the composition can be provided.

### MODE FOR CARRYING OUT THE INVENTION

### <Polyamide resin>

The polyamide resin used in the present invention can be obtained by polymerizing or copolymerizing a nylon salt composed of lactam, aminocarboxylic acid, or diamine and dicarboxylic acid as a raw material by a known method such as melt polymerization, solution polymerization or solid phase polymerization.

Examples of the lactam include caprolactam, enantolactam, undecanelactam, dodecanelactam, α-pyrrolidone, and α-piperidone. Examples of the aminocarboxylic acid include 6-aminocaproic acid, 7-aminoheptanoic acid, 9-aminononanoic acid, 11-aminoundecanoic acid, and 12-aminododecanoic acid. One kind or two or more kinds of them can be used.

Further, examples of the diamine constituting the nylon salt include aliphatic diamines such as ethylenediamine, trimethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecamethylenediamine, tetradecamethylenediamine, pentadecamethylenediamine, hexadecamethylenediamine, heptadecamethylenediamine, octadecamethylenediamine, nonadecamethylenediamine, eicosamethylenediamine, 2-/3-methyl-1,5-pentanediamine, 2-methyl-1,8-octanediamine, 2,2,4-/2,4,4-trimethylhexamethylenediamine, and 5-methyl-1,9-nonanediamine; alicyclic diamines such as 1,3-/1,4-cyclohexanediamine, 1,3-/1,4-cyclohexanedimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine (isophoronediamine), bis(aminopropyl)piperazine, bis(aminoethyl)piperazine, norbornanedimethylamine, and tricyclodecanedimethylamine; and aromatic diamines such as m-/p-xylylenediamine. One kind or two or more kinds of them can be used.

On the other hand, examples of the dicarboxylic acid constituting the nylon salt include aliphatic dicarboxylic acids such as adipic acid, pimelic acid, suberic acid, azelaic acid, sebacic acid, undecane diacid, dodecane diacid, tridecane diacid, tetradecane diacid, pentadecane diacid, hexadecane diacid, octadecane diacid, and eicosane diacid; alicyclic dicarboxylic acids such as 1,3-/1,4- cyclohexane dicarboxylic acid, dicyclohexane methane-4,4'-dicarboxylic acid, and norbornane dicarboxylic acid; and aromatic dicarboxylic acids such as isophthalic acid, terephthalic acid, and 1,4-/2,6-/2,7-naphthalenedicarboxylic acid. One kind or two or more kinds of them can be used.

In the polyamide resin, each homopolymer (homopolyamide) or copolymer (copolyamide) derived from the nylon salt composed of these lactams, aminocarboxylic acids, or diamines and dicarboxylic acids can be used alone or in a mixed form.

Specific examples of the component constituting the polyamide resin used in the present invention include polycaprolactam (polyamide 6), polyundecanelactam (polyamide 11), polydodecanelactam (polyamide 12), polyethylene adipamide (polyamide 26), polytetramethylene adipamide (polyamide 46), polyhexamethylene adipamide (polyamide 66), polyhexamethylene azelamide (polyamide 69), polyhexamethylene sebacamide (polyamide 610), polyhexamethylene undecamide (polyamide 611), polyhexamethylene dodecamide (polyamide 612), polyhexamethylene terephthalamide (polyamide 6T), polyhexamethylene isophthalamide (polyamide 6I), polyhexamethylene hexahydroterephthalamide (polyamide 6T(H)), polynonamethylene adipamide (polyamide 96), polynonamethylene azelamide (polyamide 99), polynonamethylene sebacamide (polyamide 910), polynonamethylene dodecamide (polyamide 912), polynonamethylene terephthalamide (polyamide 9T), polytrimethylhexamethylene terephthalamide (polyamide TMHT), polynonamethylene hexaterephthalamide (polyamide 9T(H)), polynonamethylene naphthalamide (polyamide 9N), polydecamethylene adipamide (polyamide 106), polydecamethylene azelamide (polyamide 109), polydecamethylene decamide (polyamide 1010), polydecamethylene dodecamide (polyamide 1012), polydecamethylene terephthalamide (polyamide 10T), polydecamethylene hexaterephthalamide (polyamide 10T(H)), polydecamethylene naphthalamide (polyamide 10N), polydodecamethylene adipamide (polyamide 126), polydodecamethylene azelamide (polyamide 129), polydodecamethylene sebacamide (polyamide 1210), polydodecamethylene dodecamide (polyamide 1212), polydodecamethylene terephthalamide (polyamide 12T), polydodecamethylene hexahydroterephthalamide (polyamide 12T(H)), polydodecamethylene naphthalamide (polyamide 12N), polymetaxylyleneadipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polymetaxylylene terephthalamide (polyamide MXDT), polymetaxylylene isphthalamide (polyamide MXDI), polymetaxylylene naphthalamide (polyamide MXDN), polybis(4-aminocyclohexyl)methane dodecamide (polyamide PACM12), polybis(4-aminocyclohexyl)methane terephthalamide (polyamide PACMT), polybis(4-aminocyclohexyl)methane isophthalamide (polyamide PACMI), polybis(3-methyl-4-aminocyclohexyl)methane dodecamide (polyamidedimethyl PACM12), polyisophrone adipamide (polyamide IPD6), polyisophorone terephthalamide (polyamide IPDT) (hereinbefore, homopolyamide), and polyamide copolymers using these raw material monomers (copolyamide). One kind or two or more kinds of them can be used.

Considering heat resistance, mechanical strength, transparency, economic efficiency, and availability of the film obtained, the polyamide resin is preferably a homopolymer or a copolymer which is composed of at least one selected from the group consisting of unit derived from caprolactam (caprolactam unit), unit derived from hexamethylenediamine and adipic acid (hexamethylene adipamide unit), and unit derived from dodecanelactam (dodecalactam unit). Specifically, the polyamide resin is preferably at least one selected from the group consisting of polyamide 6, polyamide 12, polyamide 66, polyamide 6/66 copolymer (copolymer of polyamide 6 and polyamide 66, hereinafter copolymer is similarly described), polyamide 6/69 copolymer, polyamide 6/610 copolymer, polyamide 6/611 copolymer, polyamide 6/612 copolymer, polyamide 6/12 copolymer, polyamide 6/66/12 copolymer, polyamide 6/6T copolymer, polyamide 6/6I copolymer, polyamide 6/IPD6 copolymer, polyamide 6/IPDT copolymer, polyamide 66/6T copolymer, polyamide 66/6I copolymer, polyamide 6T/6I copolymer, polyamide 66/6T/6I copolymer, and polyamide MXD6. The polyamide resin is more preferably at least one selected from the group consisting of polyamide 6, polyamide 12, polyamide 66, polyamide 6/66 copolymer, polyamide 6/12 copolymer, polyamide 6/IPD6 copolymer, polyamide 6/IPDT copolymer, and polyamide 6/66/12 copolymer. The polyamide resin is further preferably at least one selected from the group consisting of polyamide 6, polyamide 6/66 copolymer, polyamide 6/12 copolymer, and polyamide 6/66/12 copolymer.

As for the blending ratio of the homopolyamide and the copolyamide in the case in which the polyamide resin is composed of the homopolyamide and the copolyamide, the homopolyamide/copolyamide (weight ratio) is preferably from 20/80 to 98/2, is more preferably from 30/70 to 95/5, and is further preferably from 40/60 to 90/10.

The relative viscosity of the polyamide resin as measured according to JIS K-6920 is preferably from 2.0 to 5.0, and is more preferably from 2.5 to 4.5. When the relative viscosity of the polyamide resin is not less than the lower limit described above, the polyamide film obtained has good mechanical properties. On the other hand, when the relative viscosity of the polyamide resin is not more than the upper limit described above, the melting viscosity of the resin is decreased, and the film is easily molded.

The polyamide resin can be produced by polymerizing or copolymerizing the raw materials of the polyamide resin in the presence of an amine by a known method such as melt polymerization, solution polymerization, or solid phase polymerization. Alternatively, the resin is produced by polymerizing the raw materials, and then by melt-kneading them in the presence of an amine. Thus, the amine can be added at an arbitrary step during polymerization, or at an arbitrary step during melt-kneading after polymerization. However, the amine is preferably added at a step during polymerization, considering melt stability during film forming.

Examples of the amine include monoamines, diamines, and polyamines. Further, in addition to the amine, a carboxylic acid such as a monocarboxylic acid or a dicarboxylic acid can be added, if needed. These amines and carboxylic acids may be added simultaneously, or may be added separately. Further, one kind or two or more kinds of the amines and carboxylic acids exemplified below may be used.

Specific examples of the monoamine added include aliphatic monoamines such as methylamine, ethylamine, propylamine, butylamine, pentylamine, hexylamine, heptylamine, octylamine, 2-ethylhexylamine, nonylamine, decylamine, undecylamine, dodecylamine, tridecylamine, tetradecylamine, pentadecylamine, hexadecylamine, octadecylamine, octadecyleneamine, eicosylamine, and docosylamine; alicyclic monoamines such as cyclohexylamine and methylcyclohexylamine; aromatic monoamines such as benzylamine and beta-phenylmethylamine; symmetrical secondary amines such as N,N-dimethylamine, N,N-diethylamine, N,N-dipropylamine, N,N-dibutylamine, N,N-dihexylamine, and N,N-dioctylamine; and asymmetrical secondary amines such as N-methyl-N-ethylamine, N-methyl-N-butylamine, N-methyl-N-dodecylamine, N-methyl-N-octadecylamine, N-ethyl-N-hexadecylamine, N-ethyl-N-octadecylamine, N-propyl-N-hexadecylamine, and N-propyl-N-benzylamine.

Specific examples of the diamine added include aliphatic diamines such as ethylenediamine, trimethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecamethylenediamine, tetradecamethylenediamine, pentadecamethylenediamine, hexadecamethylenediamine, heptadecamethylenediamine, octadecamethylenediamine, nonadecamethylenediamine, eicosamethylenediamine, 2-/3-methyl-1,5-pentanediamine, 2-methyl-1,8-octanediamine, 2,2,4-/2,4,4-trimethyl-1,6-hexanediamine, 5-methyl-1,9-nonanediamine; alicyclic diamines such as 1,3-/1,4-cyclohexane dimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentane methylamine, 5-amino-1,3,3-trimethylcyclohexane methylamine, bis(aminopropyl)piperazine, bis(aminoethyl)piperazine, norbornanedimethylamine, and tricyclodecane dimethylamine; and aromatic diamines such as m-/p-xylylenediamine.

The polyamine added should be a compound having a plurality of a primary amino group (-NH₂) and/or a secondary amino group (-NH-). Examples thereof include polyalkylene imines, polyalkylene polyamines, polyvinylamines, and polyallylamines. The amino group containing an active hydrogen is a reaction point of the polyamine.

The polyalkylene imine can be produced by a method of ion-polymerizing an alkylene imine such as ethylene imine or propylene imine, or by a method of polymerizing an alkyloxazoline and then by partially or totally hydrolyzing the polymer. Examples of the polyalkylene polyamine include reaction products of diethylenetriamine, triethylenetetramine, pentaethylenehexamine, or ethylenediamine with a multifunctional compound. The polyvinyl amine can be, for example, obtained by polymerizing N-vinyl formamide to form a poly(N-vinyl formamide) and then by partially or totally hydrolyzing the polymer with an acid such as hydrochloric acid. The polyallylamine can be typically obtained by polymerizing a hydrochloride salt of an allylamine monomer and by removing hydrochloric acid. One kind or two or more kinds of them can be used. Among them, polyalkylene imines are preferable.

Examples of the polyalkylene imine include homopolymers or copolymers obtained by polymerizing one kind or two or more kinds of alkylene imines having a carbon number of 2 to 8 such as ethylene imine, propylene imine, 1,2-butylene imine, 2,3-butylene imine, and 1,1-dimethylethylene imine by a common method. Among them, polyethylene imines are more preferable. The polyalkylene imine may be a branched polyalkylene imine containing a primary amine, a secondary amine, and a tertiary amine, which can be obtained by using an alkylene imine as a raw material and then by ring-opening polylmerizing it, or may be a linear polyalkylene imine containing only a primary amine and a secondary amine, which can be obtained by using an alkyloxazoline as a raw material and then by polylmerizing it, or may be a three-dimensionally crosslinked structure. Further, it may contain ethylenediamine, propylenediamine, diethylenetriamine, triethylenetetramine, tetraethylenepentamine, dipropylene triamine, tripropylene tetramine, dihexamethylene triamine, aminopropylethylene diamine, or bisaminopropylethylene diamine. Typically, the polyalkylene imine has a primary amino group and a secondary amino group (an imino group) containing an active hydrogen atom in addition to a tertiary amine, depending on the reactivity of the active hydrogen atom on a nitrogen atom contained in the polyalkylene imine.

The nitrogen atom number of the polyalkylene imine is not particularly limited, but is preferably from 4 to 3,000, is more preferably from 8 to 1,500, and is further preferably from 11 to 500. Further, the number average molecular weight of the polyalkylene imine is preferably from 100 to 20,000, is more preferably from 200 to 10,000, and is further preferably from 500 to 8,000.

On the other hand, examples of the carboxylic acid added include aliphatic monocarboxylic acids such as acetic acid, propionic acid, butyric acid, valeric acid, caproic acid, enanthic acid, caprylic acid, capric acid, pelargonic acid, undecanoic acid, lauric acid, tridecanoic acid, myristic acid, myristoleic acid, palmitic acid, stearic acid, oleic acid, linoleic acid, arachic acid, behenic acid, and erucic acid; alicyclic monocarboxylic acids such as cyclohexane carboxylic acid and methyl cyclohexane carboxylic acid; aromatic monocarboxylic acids such as benzoic acid, toluic acid, ethylbenzoic acid, and phenylacetic acid; aliphatic dicarboxylic acids such as malonic acid, succinic acid, glutaric acid, adipic acid, pimelic acid, suberic acid, azelaic acid, sebacic acid, undecane diacid, dodecane diacid, hexadecane diacid, hexadecene diacid, octadecane diacid, octadecene diacid, eicosane diacid, eicocene diacid, docosane diacid, diglycolic acid, 2,2,4-/2,4,4-trimethyladipic acid; alicyclic dicarboxylic acids such as 1,4-cyclohexane dicarboxylic acid and norbornane dicarboxylic acid; and aromatic dicarboxylic acids such as terephthalic acid, isophthalic acid, phthalic acid, m-/p-xylylene dicarboxylic acid, and 1,4-/2,6-/2,7-naphthalene dicarboxylic acid.

Therefore, the diamine and/or the polyamine is preferably added during the polymerization without decreasing the productivity of the polyamide resin. In terms of the prevention of gelling, at least one selected from the group consisting of aliphatic diamines, alicyclic diamines, and polyamines is more preferably added.

Also, the polyamide resin may be a mixture of two or more kinds of polyamide resins having a different terminal group concentration. In this case, the terminal amino group concentration and the terminal carboxyl group concentration of the polyamide resin mixture are determined by the terminal amino group concentration and the terminal carboxyl group concentration of the polyamide resin constituting the mixture, and the blending ratio of them.

In addition, for the polyamide resin, the amount of the extracted water, as measured according to the method of measuring the content of the low molecular weight compound as described in JIS K-6920, is preferably 1.0% or less, and is more preferably 0.5% or less. If the amount of the extracted water is beyond the value described above, an oligomer component remarkably adheres near the die, which tend to result in poor appearance due to a formation of die line and fisheye. Further, the polyamide resin has a hygroscopicity larger than that of an olefin resin. If the moisture-absorbed polyamide resin is used, when the raw materials are melted and extruded, the hydrolysis occurs to form an oligomer, and then leads to difficulty in the production of the film. Therefore, it is preferable that the polyamide resin is preliminarily dried so that the content of water is 0.1 mass% or less.

### <Non-modified polypropylene resin>

The non-modified polypropylene resin used in the present invention is a non-modified polypropylene as a major component. Note that, in the present invention, the non-modified polypropylene resin seems to exert a function of changing the surface properties of the film due to its easy bleeding. The polypropylene may be a homopolymer containing propylene alone, or a copolymer containing propylene and an olefin other than propylene. Examples of the olefin other than propylene include olefins having a carbon number of 2 to 8 (except for propylene), such as ethylene, **1-**butene, 1-pentene, 1-hexene, 4-methyl-1-pentene, and 1-octene. Among them, ethylene is preferred. Therefore, examples of the polypropylene include propylene homopolymers such as isotactic polypropylenes; propylene-α-olefin random copolymers such as propylene-ethylene random copolymers and propylene-butene random copolymers; propylene-α-olefin block copolymers such as propylene-ethylene block copolymers and propylene-butene block copolymers; and propylene containing ternary copolymers such as propylene-ethylene-butene copolymers. Also, the polypropylene may be one kind or two or more kinds. The stereoregularity (tacticity) is not particularly limited, and may be isotactic, syndiotactic, and atactic. Isotactic is preferable in terms of the properties including rigidity.

The non-modified polypropylene resin preferably consists of only the non-modified polypropylene. However, a small amount of another component may be included as long as the properties are not impaired. The content of the non-modified polypropylene in the non-modified polypropylene resin is preferably 95 mass% or more, is more preferably 97 mass% or more, and is further preferably 99 mass% or more.

The melt flow rate of the non-modified polypropylene resin as measured according to ASTM D1238 (MFR at 230°C and 2,160 g) is preferably from 0.1 to 80 g/10min, and is more preferably from 1 to 75 g/10min.

### <Polyolefin wax>

For example, the polyolefin wax used in the present invention is the one composed of a homopolymer or a copolymer of an α-olefin having a carbon atom number of 2 to 20, whose melting point is 50 to 170°C, and whose viscosity at a temperature which is 10°C higher than the melting point is low, i.e., 10 Pa·s or less. Note that in the present invention, since the polyolefin wax has a function as a surfactant, the resin seems to prevent the decrease of the releasability and to improve the dispersibility. Examples of the polyolefin wax include polyethylene waxes composed of ethylene as a major component, and polypropylene waxes composed of propylene as a major component. The polyolefin wax may be a non-modified wax or a modified wax. Examples of the modified polyolefin wax include vinyl ester-modified polyolefin waxes, acid-modified polyolefin waxes, and oxidized polyolefin waxes.

The polyethylene wax may be the one composed of ethylene alone, or may be the one composed of ethylene-α-olefin copolymer. Examples of the α-olefin include α-olefins having a carbon atom number of 3 to 20, such as propylene, 1-butene, isobutylene, 1-pentene, 1-hexene, 1-heptene, 1-octene, 1-decene, 1-dodecene, 1-hexadecene, 1-octadecene, and 4-methyl-1-pentene. The content of the ethylene unit in the ethylene-α-olefin copolymer wax is preferably more than 50 mol%. The polyethylene wax may be a non-modified wax or a modified wax. Examples of the non-modified polyethylene wax include Licowax (registered trademark) PE520, PE130, and PE190; Licocene (registered trademark) PE3101TP, PE4201, and PE5301; and Ceridust (registered trademark) 3620 and 3610, manufactured by Clariant Chemicals.

The polypropylene wax may be the one composed of propylene alone, or may be the one composed of propylene-α-olefin copolymer. Examples of the α-olefin include α-olefins having a carbon atom number of 3 to 20, such as ethylene, 1-butene, isobutylene, 1-pentene, 1-hexene, 1-heptene, 1-octene, 1-decene, 1-dodecene, 1-hexadecene, 1-octadecene, and 4-methyl-1-pentene. The content of the propylene unit in the propylene-α-olefin copolymer wax is preferably more than 50 mol%. The polypropylene wax may be a non-modified wax or a modified wax. Examples of the non-modified polypropylene wax include Licocene (registered trademark) PP6102, PP6502, PP7502, PP1302, PP1502, PP1602, PP2602, and PP3602; and Ceridust (registered trademark) 6050M, manufactured by Clariant Chemicals.

The vinyl ester-modified polyolefin wax can be obtained by copolymerizing a monomer constituting the corresponding non-modified polyolefin wax with a vinyl ester such as vinyl acetate or vinyl propionate. Examples of the vinyl acetate-modified polyethylene wax include Licowax (registered trademark) 371FP, manufactured by Clariant Chemicals.

The acid-modified polyolefin wax can be obtained by acid-modifying the corresponding non-modified polyolefin wax with an unsaturated carboxylic acid or an acid anhydride thereof. Specific examples of the unsaturated carboxylic acid or the acid anhydride thereof include maleic acid, fumaric acid, itaconic acid, acrylic acid, methacrylic acid, cis-4-cyclohexene-1,2-dicarboxylic acid, maleic anhydride, itaconic anhydride, and cis-4-cyclohexene-1,2-dicarboxylic anhydride. Maleic anhydride is preferable. Instead of the unsaturated carboxylic anhydride, a derivative such as acid amide or acid ester may be used. Examples of the maleic anhydride-modified polyethylene wax include Licocene (registered trademark) PE MA 4221 and PE MA 4351, manufactured by Clariant Chemicals. Examples of the maleic anhydride-modified polypropylene wax include Licocene (registered trademark) PP MA 1332, PP MA 6252, PP MA 6452, and PP MA 7452, manufactured by Clariant Chemicals.

The oxidized polyolefin wax can be obtained by oxidizing the corresponding non-modified polyolefin wax. Examples of the oxidized polyethylene wax include Licowax (registered trademark) PED521, PED522, and PED121; and Ceridust (registered trademark) 3715, manufactured by Clariant Chemicals.

### <Modified polyethylene resin>

The modified polyethylene resin used in the present invention can be obtained by modifying a (non-modified) polyethylene resin when the polymer is synthesized or after the polymer was synthesized. Note that in the present invention, since the modified polyethylene resin has a function as a surfactant, the resin seems to prevent the decrease of the releasability and to improve the dispersibility. Examples of the non-modified polyethylene resin include high density polyethylenes (HDPE), middle density polyethylenes (MDPE), low density polyethylenes (LDPE), and linear low density polyethylenes (LLDPE).

Examples of the modified polyethylene resin include vinyl ester-modified polyethylene resins, acid-modified polyethylene resins, and oxidized polyethylene resins. The vinyl ester-modified polyethylene resin can be obtained by copolymerizing ethylene with a vinyl ester such as vinyl acetate or vinyl propionate. The acid-modified polyethylene resin can be obtained by acid-modifying a polyethylene resin with an unsaturated carboxylic acid or an acid anhydride thereof. Examples of the unsaturated carboxylic acid or the acid anhydride thereof include maleic acid, fumaric acid, itaconic acid, acrylic acid, methacrylic acid, cis-4-cyclohexene-1,2-dicarboxylic acid, maleic anhydride, itaconic anhydride, and cis-4-cyclohexene-1,2-dicarboxylic anhydride. Maleic anhydride is preferable. Instead of the unsaturated carboxylic anhydride, a derivative such as acid amide or acid ester may be used. The oxidized polyethylene resin can be obtained by oxidation-treating a polyethylene resin. Examples of the maleic anhydride-modified polyethylene resin include F3000 (product name) manufactured by UBE-MARUZEN POLYETHYLENE, and ADMER NF528T (product name) manufactured by Mitsui Chemicals, Inc.

The melt flow rate of the modified polyethylene resin as measured according to ASTM D1238 (MFR at 190°C and 2,160 g) is preferably from 0.1 to 60 g/10 min, and more preferably from 0.5 to 55 g/10 min.

### <Polyamide resin composition>

The polyamide resin composition used in the the present invention contains a polyamide resin, a non-modified polypropylene resin, and a polyolefin wax and/or a modified polyethylene resin.

In the present invention, the content of the non-modified polypropylene resin is from 0.1 to 10 mass% based on the polyamide resin composition. When the content is within the range, the releasability when made into a film can be improved. The content of the non-modified polypropylene resin is preferably from 0.5 to 8 mass% based on the polyamide resin composition, and is more preferably from 1 to 5 mass%.

In the present invention, the content of the polyolefin wax and/or the modified polyethylene resin is from 0.3 to 5 mass% based on the polyamide resin composition. When the content is within the range, the releasability when made into a film can be improved.

The polyamide resin composition of the present invention may contain a typically blended various kind of additives or modifying agents such as heat stabilizers, UV absorbers, light stabilizers, antioxidants, anti-static agents, lubricants, anti-blocking agents, fillers, tackifying agents, sealing properties improving agents, anti-fog agents, crystal nucleating agents, release agents, plasticizers, crosslinking agents, foaming agents, colorants (pigments and dyes), and anti-bending fatigue properties improving agents within a range so that the properties of the film obtained is not impaired. The polyamide resin composition of the present invention particularly preferably contains an anti-blocking agent and/or an antioxidant.

The anti-blocking agent is a substance added for preventing the adhesion between films by providing concavity and convexity to the surface when made into a film. For the anti-blocking agent, the shape is not particularly limited as long as the polyamide film having a surface protrusion formed on the surface and having improved sliding performance can be obtained. The anti-blocking agent may have a shape of powder, particle, flake, plate, fiber, needle, cross, mat, and the other shapes, but preferably has a shape of particle or plate. The average particle size of the anti-blocking agent is preferably from 0.5 to 10 µm. It is desirable that particles having a particle size of 10 µm or more are not substantially contained. If large amounts of particles having a particle size of 10 µm or more is contained, the fisheye gel may be generated, and the appearance of the film may be impaired. Further, even if the effect of improving the slipperiness is exerted, the transparency of the film may be impaired. On the other hand, if the average particle size is less than 0.5 µm, the particle tends to form secondary aggregates, and may also result in the fisheye gel. Further, even if the aggregation can be prevented, obtaining the effect of concavity and convexity on the surface is difficult, and the slipperiness may not be improved. Therefore, if the particle size of the anti-blocking agent is not suitable for the present invention, crushing treatment and classification are desirably performed preliminarily.

Specific examples of the anti-blocking agent include silica such as gel type silica, precipitated type silica, and spherical silica; talc, kaolin, montmorillonite, zeolite, mica, glass flake, wollastonite, potassium titanate, magnesium sulfate, sepiolite, zonolite, aluminum borate, glass beads, calcium silicate, calcium carbonate, titanium oxide, barium sulfate, zinc oxide, and magnesium hydroxide. One kind or two or more kinds of them can be used. Among them, talc, kaolin, zeolite, and silica are preferable in terms of easy dispersibility. One kind or two or more kinds of them can be used.

In particular, since the film obtained has improved transparency and slipperiness, silica is more preferably used as the anti-blocking agent. The silica contains silicon dioxide represented by SiO₂·nH₂O as a major component. The silica is classified into two silicas, that are wet method silica and dry method silica, due to the production method, and both of them can be used. In particular, the average particle size of silica is preferably from 0.1 to 20 µm, is more preferably from 0.3 to 15 µm, and is further preferably from 0.5 to 10 µm. Further, primary particles have a size of so-called submicron order. There are a soft silica obtained by aggregating the primary particles to form secondary particles or tertiary particles, and a hard silica in which the size of the original primary particles is 1 µm or more. When the film was stretched, the soft silica is more preferable.

A non-surface treated silica may be used, but a surface treated silica may be used. When the anti-blocking agent treated with a silane-based or a titanium-based surface treating agent was used, the dispersibility is further improved, and the transparency of the film obtained is further improved. The surface treating method is not particularly limited. For example, by the method described in JP 63-251460, a method for treating fine silica by adding a silane coupling agent diluted with a water to the silica while heating and stirring can be applied.

The content of the anti-blocking agent is preferably from 0.01 to 5 mass% based on the polyamide resin composition, is more preferably from 0.05 to 3 mass%, and is further preferably from 0.1 to 1 mass%.

The antioxidant is a substance added for preventing the oxidization of components. Examples of the antioxidant include phosphorus-based antioxidants, phenol-based antioxidants, sulfur-based antioxidants, hydrazine-based antioxidants, amide-based antioxidants, halogenated potassium, and copper compounds. Among them, a combination of potassium iodide and/or potassium bromide and copper iodide is preferably used. One kind or two or more kinds of them can be used. The content of the antioxidant is preferably from 0.001 to 5 mass% based on the polyamide resin composition, is more preferably from 0.003 to 3 mass%, and is further preferably from 0.005 to 1 mass%.

Since the polyamide resin composition of the present invention has good releasability when made into a film, the composition is preferably used for the release film.

### <Release film>

The release film of the present invention (hereinafter may simply be referred to as "film") contains a polyamide resin composition described above.

The film can be obtained by film-forming in a known film production method. For example, examples thereof include casting method of producing a film by melting and kneading a raw material polyamide resin composition in an extruder, by extruding the composition to a flat film shape by a T-die or a coat hanger die, by casting it on a casting roll, and then by cooling, and tubular method of producing a film by melting and extruding the composition by a ring die to form a tubular product, and by cooling with air or water. The film produced may be substantially non-oriented and non-stretched form, or may be stretched form.

When the non-stretched film is stretched, a conventionally known industrial method may be used. Examples thereof include simultaneous and biaxial stretching method in which the non-stretched film produced by the casting method is stretched simultaneously in the longitudinal and lateral directions by a tenter simultaneous and biaxial stretching machine, sequential and biaxial stretching method in which the non-stretched film melted and extruded by the T-die is stretched in the longitudinal direction by a roll stretching machine, and is then stretched in the lateral direction by a tenter stretching machine, and tubular stretching method in which a tubular sheet formed by a ring die is stretched simultaneously in the longitudinal and lateral directions by air pressure in an inflation way. A stretching step may be continuously performed after film-forming, or the film produced may be wound, and then the stretching may be performed as a separate step.

The thickness of the film may be determined depending on the application, which is not particularly limited. For example, when the thickness of the film is thick, the strength of the film is improved, but the transparency and the anti-bending fatigue are decreased. Therefore, considering them, the thickness of the film can be determined. In a monolayer film, the thickness of the film is preferably from 5 to 200 µm, is more preferably from 10 to 150 µm, and is further preferably from 15 to 100 µm.

### EXAMPLES

Hereinafter, the present invention will be specifically described by the Examples.

### <Example 1-1>

A release film having a thickness of 50 µm was obtained by blending components shown in TABLE 1 to prepare a polyamide resin composition and by extruding the composition in a single screw T die film forming machine at 270°C at 50 rpm. Note that the blending amount of each component described by the unit "mass ppm" is an added amount of the component based on 100 parts by mass in total of the components described by the unit "parts by mass" (the same applies hereinafter). Further, polyamide 6 (PA6, manufactured by Ube Industries, Ltd., product name: 1030B) was used as the polyamide resin, a polypropylene homopolymer (isotactic PP, manufactured by Prime Polymer Co., Ltd., product name: J108M, melt flow rate: 45 g/10 min at 230°C) was used as the non-modified polypropylene resin, a maleic anhydride-modified polyethylene resin (MAH-g-PE, manufactured by UBE-MARUZEN POLYETHYLENE, product name: F3000) was used as the modified polyethylene resin, a non-surface treated gel type silica (having average particle size of 1 to 4 µm) was used as the anti-blocking agent (AB), and copper iodide and potassium iodide were used as the antioxidant (AO).

### <Examples 1-2 to 1-9>

Each release film was obtained by the same method as in Example 1-1 except that the blending ratio of the components was changed as described in TABLE 1.

### <Examples 1-10 to 1-13>

Each release film was obtained by the same method as in Example 1-1 except that the kind of the non-modified polypropylene resin was changed, and that the blending ratio of the components was changed as described in TABLE 1. Note that as the non-modified polypropylene resin, a polypropylene homopolymer (isotactic PP, manufactured by Prime Polymer Co., Ltd., product name: J106MG, melt flow rate: 15 g/10min at 230°C) was used in Example 1-10, a polypropylene homopolymer (isotactic PP, manufactured by Prime Polymer Co., Ltd., product name: J105G, melt flow rate: 9.0 g/10min at 230°C) was used in Example 1-11, a polypropylene homopolymer (isotactic PP, manufactured by Prime Polymer Co., Ltd., product name: E-100GPL, melt flow rate: 1.0 g/10min at 230°C) was used in Example 1-12, and a polypropylene homopolymer (isotactic PP, manufactured by Prime Polymer Co., Ltd., product name: F113G, the melt flow rate: 3.0 g/10min at 230°C) was used in Example 1-13.

### <Examples 1-14 to 1-16>

Each release film was obtained by the same method as in Example 1-1 except that a polyolefin wax was used instead of the maleic anhydride-modified polyethylene resin, and that the blending ratio of the components was changed as described in TABLE 1. Note that a non-modified polyethylene wax (PE-wax, manufactured by Clariant Chemicals, product name: Licowax (registered trademark) PE520) was used in Example 1-14, a non-modified polypropylene wax (PP-wax, manufactured by Clariant Chemicals, product name: Licocene (registered trademark) PP6102) was used in Example 1-15, and a maleic anhydride-modified polypropylene wax (MAH-PP-wax, manufactured by Clariant Chemicals, product name: Licocene (registered trademark) PP MA 6452) was used in Example 1-16.

### <Comparative Example 1-1>

A release film was obtained by the same method as in Example 1-1 except that the maleic anhydride-modified polyethylene resin was not used, and that the blending ratio of the components was changed as described in TABLE 2.

### <Comparative Example 1-2>

A release film was obtained by the same method as in Example 1-1 except that a maleic anhydride-modified polypropylene resin (MAH-PP, manufactured by Prime Polymer Co., Ltd., product name: ZP648, melt flow rate: 55 g/10min at 230°C) was used instead of the maleic anhydride-modified polyethylene resin, and that the blending ratio of the components was changed as described in TABLE 2.

### <Comparative Examples 1-3 to 1-11>

Each release film was obtained by the same method as in Example 1-1 except that a component commonly used for providing the releasability was used instead of the non-modified polypropylene resin and the maleic anhydride-modified polyethylene resin, and that the blending ratio of the components was changed as described in TABLE 2. Note that a low density polyethylene (LDPE, manufactured by UBE-MARUZEN POLYETHYLENE, product name: C470) was used in Comparative Example 1-3, a metallocene catalyst linear short chain branched polyethylene (LLDPE, manufactured by UBE-MARUZEN POLYETHYLENE, product name: 2040F) was used in Comparative Example 1-4, a fluorine resin (FR, manufactured by AGC Inc., product name: AH-2000) was used in Comparative Example 1-5, a fluorine resin (FR, manufactured by AGC Inc., product name: LM730AP) was used in Comparative Example 1-6, a silicone resin (SR, manufactured by Dow Corning Toray Co., Ltd., product name: MB50-011) was used in Comparative Example 1-7, a mold release agent (manufactured by Nitto Kasei Co., Ltd., product name: Ca-Beh) was used in Comparative Examples 1-8 and 1-9, an ethylene bisstearamide (EBS, manufactured by KYOEISHA CHEMICAL Co., LTD., product name: WH-100) was used in Comparative Example 1-10, and an ethylene bisbehenamide (EBB, manufactured by Nihon Kasei CO., LTD, product name: Slipax B) was used in Comparative Example 1-11.

### <Comparative Example 1-12>

A release film was obtained by the same method as in Example 1-1 except that the non-modified polypropylene resin and the maleic anhydride-modified polyethylene resin were not used, and that the blending ratio of the components was changed as described in TABLE 2.

### <Evaluation 1>

The release films obtained in Examples 1-1 to 1-16 and Comparative Examples 1-1 to 1-12 were evaluated for the appearance and the releasability by the method and criteria described below.

### <Appearance>

The appearances of the obtained release films were visually observed, and determined by the following criteria.
O: No problem
×: Incompatible parts were partially observed.
××: Film streaks as well as incompatible parts were observed.

### <Peel Test>

A CFRP prepreg was sandwiched between the release films obtained as described above, and was heat-cured at 150°C for 2 hours in an autoclave under pressure. After cooling, the sample was removed. The release film was peeled from the sample, and the releasability was evaluated.
⊚: Excellent
○: Good
△: Mid-level
×: Broken

**TABLE 1**

| Example | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 |
|---|---|---|---|---|---|---|---|---|---|---|---|---|---|---|---|---|---|
| PA6 | parts by mass | 94.0 | 92.0 | 90.0 | 90.0 | 98.5 | 98.0 | 97.0 | 96.5 | 96.0 | 90.0 | 90.0 | 90.0 | 90.0 | 94.5 | 94.7 | 94.7 |
| Anti-blocking agent | mass ppm | 1500 | 1500 | 1500 | 1200 | 1200 | 1200 | 1200 | 1200 | 1200 | 1500 | 1500 | 1500 | 1500 | 1200 | 1200 | 1200 |
| Antioxidant | mass ppm | 1100 | 1100 | 1100 | 1100 | 1100 | 1100 | 1100 | 1100 | 1100 | 1100 | 1100 | 1100 | 1100 | 1100 | 1100 | 1100 |
| PP (J108M) | parts by mass | 5.0 | 5.0 | 5.0 | 5.0 | 1.0 | 1.0 | 2.0 | 3.0 | 3.0 | | | | | 5.0 | 5.0 | 5.0 |
| PP (J106MG) | parts by mass | | | | | | | | | | 5.0 | | | | | | |
| PP (J105G) | parts by mass | | | | | | | | | | | 5.0 | | | | | |
| PP (E-100GPL) | parts by mass | | | | | | | | | | | | 5.0 | | | | |
| PP (F113G) | parts by mass | | | | | | | | | | | | | 5.0 | | | |
| MAH-g-PE | parts by mass | 1.0 | 3.0 | 5.0 | 5.0 | 0.5 | 1.0 | 1.0 | 0.5 | 1.0 | 5.0 | 5.0 | 5.0 | 5.0 | | | |
| PE-wax | parts by mass | | | | | | | | | | | | | | | 0.3 | |
| PP-wax | parts by mass | | | | | | | | | | | | | | 0.5 | | |
| MAH-PP-wax | parts by mass | | | | | | | | | | | | | | | | 0.3 |
| Appearance | | ○ | ○ | ○ | ○ | ○ | ○ | ○ | ○ | ○ | ○ | ○ | ○ | ○ | ○ | ○ | ○ |
| Peel test | | ⊚ | ○ | ○ | ○ | ○ | Δ | ⊚ | ⊚ | ⊚ | ○ | ○ | Δ | ⊚ | ⊚ | ⊚ | ⊚ |

**TABLE 2**

| Comparative Example | | 1-1 | 1-2 | 1-3 | 1-4 | 1-5 | 1-6 | 1-7 | 1-8 | 1-9 | 1-10 | 1-11 | 1-12 |
|---|---|---|---|---|---|---|---|---|---|---|---|---|---|
| PA6 | parts by mass | 95.0 | 90.0 | 95.0 | 95.0 | 95.0 | 95.0 | 97.0 | 100 | 100 | 100 | 100 | 100 |
| Anti-blocking agent | mass ppm | 1200 | 1200 | 1500 | 1500 | 1500 | 1500 | 1500 | 1800 | 1800 | 1800 | 1800 | 3000 |
| Antioxidant | mass ppm | 1100 | 1100 | 1100 | 1100 | 1100 | 1100 | 1100 | 1100 | 1100 | 1100 | 1100 | 1100 |
| PP (J108M) | parts by mass | 5.0 | 5.0 | | | | | | | | | | |
| MAH-PP | parts by mass | | 5.0 | | | | | | | | | | |
| LDPE | parts by mass | | | 5.0 | | | | | | | | | |
| LLDPE | parts by mass | | | | 5.0 | | | | | | | | |
| FR (AH-2000) | parts by mass | | | | | 5.0 | | | | | | | |
| FR (LM730AP) | parts by mass | | | | | | 5.0 | | | | | | |
| SR (MB50-011) | parts by mass | | | | | | | 3.0 | | | | | |
| Ca-Beh | mass ppm | | | | | | | | 2000 | 5000 | | | |
| EBH | mass ppm | | | | | | | | | | 3000 | | |
| EBB | mass ppm | | | | | | | | | | | 1500 | |
| Appearance | | ×× | × | × | × | ○ | × | ×× | ○ | ○ | ○ | ○ | ○ |
| Peel test | | ⊚ | ○ | × | × | × | Δ | × | × | × | × | × | × |

As described above, it has been found that each polyamide resin composition containing a polyamide resin, a non-modified polypropylene resin, and a polyolefin wax and/or a modified polyethylene resin has improved releasability when made into a film (Examples 1-1 to 1-16). In particular, since the releasability was not improved even if the component commonly used for providing the releasability was added to the polyamide resin (Comparative Examples 1-3 to 1-11), the present invention has remarkably high technical significance.

### <Example 2-1>

A release film having a thickness of 50 µm was obtained by blending components shown in TABLE 1 to prepare a polyamide resin composition and by extruding the composition in a single screw T die film forming machine at 270°C at 50 rpm. Note that the blending amount of each component described by the unit "mass ppm" is an added amount of the component based on 100 parts by mass in total of the components described by the unit "parts by mass" (the same applies hereinafter). Further, polyamide 6 (PA6, manufactured by Ube Industries, Ltd., product name: 1030B) was used as the homopolyamide which is the component of the polyamide resin, polyamide 6/66 (PA6/66, manufactured by Ube Industries, Ltd., product name: 5034B) was used as the copolyamide which is the component of the polyamide resin, a polypropylene homopolymer (isotactic PP, manufactured by Prime Polymer Co., Ltd., product name: J108M, melt flow rate: 45 g/10min at 230°C) was used as the non-modified polypropylene resin, a maleic anhydride-modified polypropylene wax (MAH-PP-wax, manufactured by Clariant Chemicals, product name: Licocene (registered trademark) PP MA 6452) was used as the modified polypropylene wax, a non-surface treated gel type silica (having average particle size of 1 to 4 µm) was used as the anti-blocking agent (AB), and copper iodide and potassium iodide were used as the antioxidant (AO).

### <Examples 2-2 to 2-7>

Each release film was obtained by the same method as in Example 2-1 except that the blending ratio of the components was changed as described in TABLE 3.

### <Comparative Examples 2-1 to 2-4>

Each release film was obtained by the same method as in Example 2-1 except that the modified polypropylene wax was not used, and that the blending ratio of the components was changed as described in TABLE 4.

### <Comparative Example 2-5>

A release film was obtained by the same method as in Example 2-1 except that the homopolyamide and the modified polypropylene wax were not used, and that the blending ratio of the components was changed as described in TABLE 4.

### <Comparative Example 2-6>

A release film was obtained by the same method as in Example 2-1 except that polyamide 6/66 (PA6/66, manufactured by Ube Industries, Ltd., product name: 5033B) was used as the copolyamide which is a component of the polyamide resin, that neither the homopolyamide nor the modified polypropylene wax was used, and that the blending ratio of the components was changed as described in TABLE 4.

### <Evaluation 2>

The release films obtained in Examples 2-1 to 2-7 and Comparative Examples 2-1 to 2-6 were evaluated for the appearance and the releasability by the method and criteria described below.

### <Appearance>

The appearances of the obtained release films were visually observed, and determined by the following criteria.
⊚: Excellent
○: Good
×: Incompatible parts were partially observed.
××: Film streaks as well as incompatible parts were observed.

### <Peel Test>

A CFRP prepreg was sandwiched between the release films obtained as described above, and was heat-cured at 160°C for 2 hours in an autoclave under pressure. After cooling, the sample was removed. The release film was peeled from the sample, and the releasability was evaluated.
⊚: Excellent
○: Good
×: Broken

**TABLE 3**

| Example | | 2-1 | 2-2 | 2-3 | 2-4 | 2-5 | 2-6 | 2-7 |
|---|---|---|---|---|---|---|---|---|
| PA6 | parts by mass | 86.7 | 66.7 | 46.7 | 76.7 | 66.7 | 74.7 | 64.7 |
| PA6/66 (5034B) | parts by mass | 10.0 | 30.0 | 50.0 | 20.0 | 30.0 | 20.0 | 30.0 |
| Anti-blocking agent | mass ppm | 1200 | 1200 | 1200 | 3000 | 3000 | 1200 | 1200 |
| Antioxidant | mass ppm | 1100 | 1100 | 1100 | 1100 | 1100 | 1100 | 1100 |
| PP | parts by mass | 3.0 | 3.0 | 3.0 | 3.0 | 3.0 | 5.0 | 5.0 |
| MAH-PP-wax | parts by mass | 0.3 | 0.3 | 0.3 | 0.3 | 0.3 | 0.3 | 0.3 |
| Appearance | | ○ | ⊚ | ⊚ | ⊚ | ⊚ | ⊚ | ⊚ |
| Peel test | | ○ | ○ | ○ | ○ | ○ | ⊚ | ⊚ |

**TABLE 4**

| Comparative Example | | 2-1 | 2-2 | 2-3 | 2-4 | 2-5 | 2-6 |
|---|---|---|---|---|---|---|---|
| PA6 | parts by mass | 87.0 | 77.0 | 47.0 | 17.0 | | |
| PA6/66 (5034B) | parts by mass | 10.0 | 20.0 | 50.0 | 80.0 | 97.0 | |
| PA6/66 (5033B) | parts by mass | | | | | | 97.0 |
| Anti-blocking agent | mass ppm | 1200 | 1200 | 1200 | 1200 | 1200 | 1200 |
| Antioxidant | mass ppm | 1100 | 1100 | 1100 | 1100 | 1100 | 1100 |
| PP | parts by mass | 3.0 | 3.0 | 3.0 | 3.0 | 3.0 | 3.0 |
| MAH-PP-wax | parts by mass | | | | | | |
| Appearance | | ×× | ×× | × | ○ | ○ | × |
| Peel test | | ○ | ○ | ○ | × | × | × |

As described above, it has been found that each polyamide resin composition containing a polyamide resin composed of a homopolyamide and a copolyamide, and a modified polypropylene wax has improved releasability when made into a film (Examples 2-1 to 2-7).

## Claims

1. Use of a polyamide resin composition for forming a release film, wherein the polyamide resin composition comprises: a polyamide resin, a non-modified polypropylene resin, and a polyolefin wax and/or a modified polyethylene resin;
wherein the content of the non-modified polypropylene resin is from 0.1 to 10 mass%; and
wherein the content of the polyolefin wax and/or the modified polyethylene resin is from 0.3 to 5 mass%.

2. The use according to claim 1, wherein the polyamide resin composition further comprises an anti-blocking agent.

3. The use according to claim 1 or 2, wherein the polyamide resin composition further comprises an antioxidant.

4. The use according to any one of claims 1 to 3, wherein the polyamide resin composition comprises the modified polyethylene resin, wherein the content of the modified polyethylene resin is from 0.3 to 5 mass%.

5. A release film, comprising a polyamide resin composition wherein the polyamide resin composition comprises: a polyamide resin, a non-modified polypropylene resin, and a polyolefin wax and/or a modified polyethylene resin;
wherein the content of the non-modified polypropylene resin is from 0.1 to 10 mass%; and
wherein the content of the polyolefin wax and/or the modified polyethylene resin is from 0.3 to 5 mass%.

6. The release film according to claim 5, wherein the polyamide resin composition further comprises an anti-blocking agent.

7. The release film according to claim 5 or 6, wherein the polyamide resin composition further comprises an antioxidant.

8. The release film according to any one of claims 5 to 7, wherein the polyamide resin composition comprises the modified polyethylene resin, wherein the content of the modified polyethylene resin is from 0.3 to 5 mass%.

## Patentansprüche

1. Verwendung einer Polyamidharzzusammensetzung zur Bildung einer Trennfolie, wobei die Polyamidharzzusammensetzung umfasst: ein Polyamidharz, ein nicht-modifiziertes Polypropylenharz und ein Polyolefinwachs und/oder ein modifiziertes Polyethylenharz,
wobei der Gehalt des nicht-modifizierten Polypropylenharzes 0,1 bis 10 Masse-% beträgt und
wobei der Gehalt des Polyolefinwachses und/oder des modifizierten Polyethylenharzes 0,3 bis 5 Masse-% beträgt.

2. Verwendung gemäß Anspruch 1, wobei die Polyamidharzzusammensetzung ferner ein Antiblockiermittel umfasst.

3. Verwendung gemäß Anspruch 1 oder 2, wobei die Polyamidharzzusammensetzung ferner ein Antioxidans umfasst.

4. Verwendung gemäß einem der Ansprüche 1 bis 3, wobei die Polyamidharzzusammensetzung das modifizierte Polyethylenharz umfasst, wobei der Gehalt des modifizierten Polyethylenharzes 0,3 bis 5 Masse-% beträgt.

5. Trennfolie, umfassend eine Polyamidharzzusammensetzung, wobei die Polyamidharzzusammensetzung umfasst: ein Polyamidharz, ein nicht-modifiziertes Polypropylenharz und ein Polyolefinwachs und/oder ein modifiziertes Polyethylenharz,
wobei der Gehalt des nicht-modifizierten Polypropylenharzes 0,1 bis 10 Masse-% beträgt und
wobei der Gehalt des Polyolefinwachses und/oder des modifizierten Polyethylenharzes 0,3 bis 5 Masse-% beträgt.

6. Trennfolie gemäß Anspruch 5, wobei die Polyamidharzzusammensetzung ferner ein Antiblockiermittel umfasst.

7. Trennfolie gemäß Anspruch 5 oder 6, wobei die Polyamidharzzusammensetzung ferner ein Antioxidans umfasst.

8. Trennfolie gemäß einem der Ansprüche 5 bis 7, wobei die Polyamidharzzusammensetzung das modifizierte Polyethylenharz umfasst, wobei der Gehalt des modifizierten Polyethylenharzes 0,3 bis 5 Masse-% beträgt.

## Revendications

1. Utilisation d'une composition de résine de polyamide pour former un film antiadhésif, dans laquelle la composition de résine de polyamide comprend : une résine de polyamide, une résine polypropylène non modifiée et une cire de polyoléfine et/ou une résine polyéthylène modifiée ;
dans laquelle la teneur en résine polypropylène non modifiée est de 0,1 à 10 % en masse ; et
dans laquelle la teneur en cire de polyoléfine et/ou en résine polyéthylène modifiée est de 0,3 à 5 % en masse.

2. Utilisation selon la revendication 1, dans laquelle la composition de résine de polyamide comprend en outre un agent antibloquant.

3. Utilisation selon la revendication 1 ou la revendication 2, dans laquelle la composition de résine de polyamide comprend en outre un antioxydant.

4. Utilisation selon l'une quelconque des revendications 1 à 3, dans laquelle la composition de résine de polyamide comprend la résine polyéthylène modifiée, dans laquelle la teneur en résine polyéthylène modifiée est de 0,3 à 5 % en masse.

5. Film antiadhésif, comprenant une composition de résine de polyamide dans lequel la composition de résine de polyamide comprend : une résine de polyamide, une résine polypropylène non modifiée, et une cire de polyoléfine et/ou une résine polyéthylène modifiée ;
dans lequel la teneur en résine polypropylène non modifiée est de 0,1 à 10 % en masse ; et
dans lequel la teneur en cire de polyoléfine et/ou en résine polyéthylène modifiée est de 0,3 à 5 % en masse.

6. Film antiadhésif selon la revendication 5, dans lequel la composition de résine de polyamide comprend en outre un agent antibloquant.

7. Film antiadhésif selon la revendication 5 ou la revendication 6, dans lequel la composition de résine de polyamide comprend en outre un antioxydant.

8. Film antiadhésif selon l'une quelconque des revendications 5 à 7, dans lequel la composition de résine de polyamide comprend la résine polyéthylène modifiée, dans lequel la teneur en résine polyéthylène modifiée est de 0,3 à 5 % en masse.
